# EUROPEAN PATENT SPECIFICATION

(11) **EP 0 661 183 B1**
(45) Date of publication and mention of the grant of the patent: **21.05.1997**
(21) Application number: 94118463.2
(22) Date of filing: 24.11.1994
(51) Int. Cl.: B60G 3/26, B60G 15/06, B62D 17/00

(54) **A suspension for a vehicle steered wheel adopting a multiple-rod arrangement**
Aufhängung für ein gelenktes Rad eines Fahrzeuges unter Benutzung von Mehrfachlenkanordnung
Suspension pour roue directrice de véhicule utilisant un arrangement à bielles multiples

(30) Priority: 29.12.1993 IT TO931009
(43) Date of publication of application: 05.07.1995
(73) Proprietor: FIAT AUTO S.p.A., 10135 Torino (IT)
(72) Inventor: Alesso, Guido, I-12038 Savigliano (CN) (IT); Spina, Michele, I-10100 Torino (IT); Beneggi, Paolo, I-20127 Milano (IT)
(74) Representative: Di Francesco, Gianni

(56) References cited:
- EP-A- 0 389 685
- EP-A- 0 486 337
- EP-A- 0 548 989
- DE-A- 3 843 614
- DE-A- 4 302 410
- PATENT ABSTRACTS OF JAPAN vol. 9, no. 142 (M-388) (1865) 18 June 1985 & JP-A-60 022 509 (MAZDA) 5 February 1985

## Description

The present invention refers to a suspension for a steerable vehicle wheel, of the kind deriving from a McPherson arrangement.

At present, the state of the art comprises suspension assemblies which derive from the above arrangement. Apart from replacing the triangular lower bracket with two arms linked to the wheel supporting bracket, these suspension assemblies also include an upper member linked to the shock absorber assembly and the wheel supporting bracket. The purpose of these devices is to accomplish a greater camber variation, during the travel of the suspension, compared to the variation so far obtainable by a McPherson kind of suspension having similar dimensions.

This kind of suspension is characterised in having a virtual steering axle, that is, the steering axle is determined by hinges that are not material but fictitious, and are located at the intersection points of the extensions of the members forming the triangles of the suspension.

These types of arrangement, as for example the one disclosed in US-A-4 844 505, allow some degree of freedom in locating the steering axle and in controlling it during steering movements, as the various positions of the hinges determining it change.

Arrangements deriving from McPherson schemes including a double lower arm and, therefore, a virtual lower hinge, also suffer from having a caster angle decrease for the outer wheel.

As the caster angle is responsible of camber recovery during steering, a caster angle decrease limits the camber angle obtainable for the outer wheel due to a determined steering angle. The possibility of recovering camber during steering is useful in controlling the steering dive when this could be deleterious (such as in sharp bends) and keep it instead at high speed in very wide bends when the steering dive constitutes a safety condition.

Apart from resolving the above inconveniences, it is also an object of this invention to contain the transversal arm at the centre of the wheel, thereby permitting, in case of front-wheel drive, to reduce stiffening of the steering wheel owing to a non-free differential.

Moreover, the hereby proposed arrangement is helpful in reducing the caster angle usually caused by the wheel bracket turning due to the braking torque.

The above objects are attained according to the present invention by a suspension for a steerable vehicle wheel of the kind adopting a multiple-rod arrangement according to claim 1.

The above and further objects will be more apparent from the ensuing description of two preferred but not-limiting embodiments of a suspension according to the invention, with reference to the accompanying drawings, in which:
- Figure 1: is a perspective view of a first embodiment of a suspension according to the present invention;
- Figure 2: is a side view of the suspension of Figure 1;
- Figure 3: is a partial top view of the suspension if Figure 1; and
- Figure 4: is a perspective view of a second embodiment of the suspension according to this invention.

Referring to the drawings, numeral 1 indicates a suspension of a steerable wheel 2 of a vehicle, having a front portion of the chassis indicated with 3.

The lower end portion of a wheel supporting bracket 4 is resiliently mounted to the chassis 3 through first and second lower arms 6, 7. The bracket 4 rotates about a rotation axis X that is near the median plane of the wheel 2 in correspondence of the wheel centre. The lower arms 6, 7 are disposed transverse to the vehicle main axis and connect to the chassis portion 3 at longitudinally spaced apart points 8, 9, and to the wheel supporting bracket 4 at points 10, 11.

The upper end portion of said bracket 4 is connected to point 12 to an appendix 13 by means of a joint head. The appendix 13 is integral with a shock absorber body 14 provided with a coil spring 15 and resiliently attached at its upper end portion 16 to the vehicle body (not shown in that point).

Secured to wheel supporting bracket 4 is a further extending portion 17, the end portion of which carries an articulated joint 18 for connecting to steering rods 20.

The upper end portion of shock absorber body 14 is coupled to the end portion 23 of an upper transversal rod 24 by a cylindrical connection. The upper transversal rod 24 is located higher up than arms 6 and 7 and is resiliently jointed to the chassis 3 at a point 25 located intermediate and above attachment points 8 and 9 of the lower arms.

A further reinforcement rod 27 is linked to upper transversal rod 24 at a point 23 intermediate its ends and substantially proximate to end portion 23. The opposite end portion 28 of reinforcement rod 27 is coupled to arm 6 at a point 29 proximate to point 8 where said arm 6 connects to the vehicle body 3.

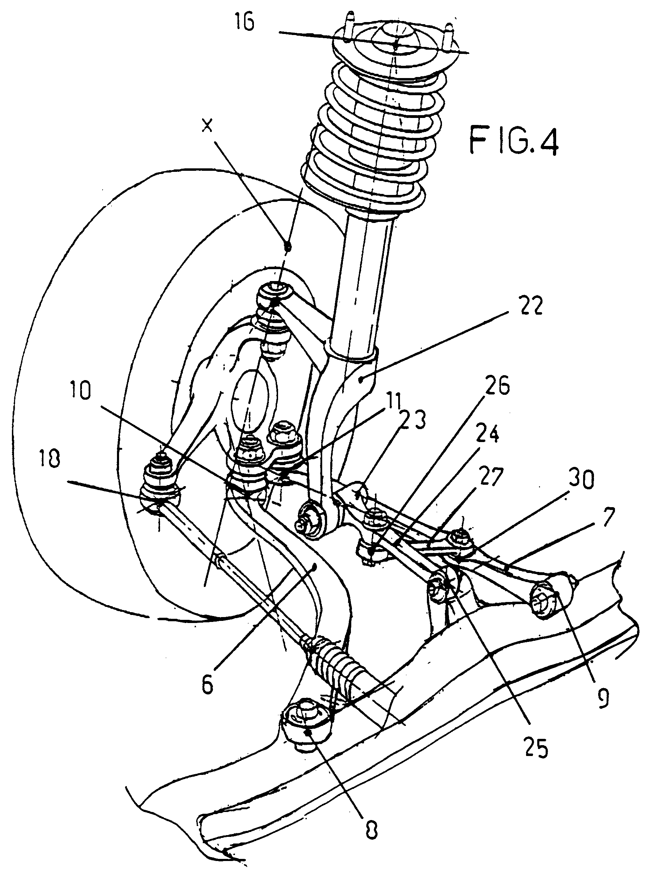

In the alternative construction shown in Fig. 4, one end of the reinforcement rod 27 couples to rod 24 at point 26, and the opposite end couples to the arm 7 at a point 30 located intermediate its ends.

In addition, articulation points 8, 29, 10 on the first lower arm 6, articulation points 9, 30, 11 on the second lower arm 7, and articulation points 23, 26, 25 on the upper transversal rod 24, may be disposed aligned on each respective rod.

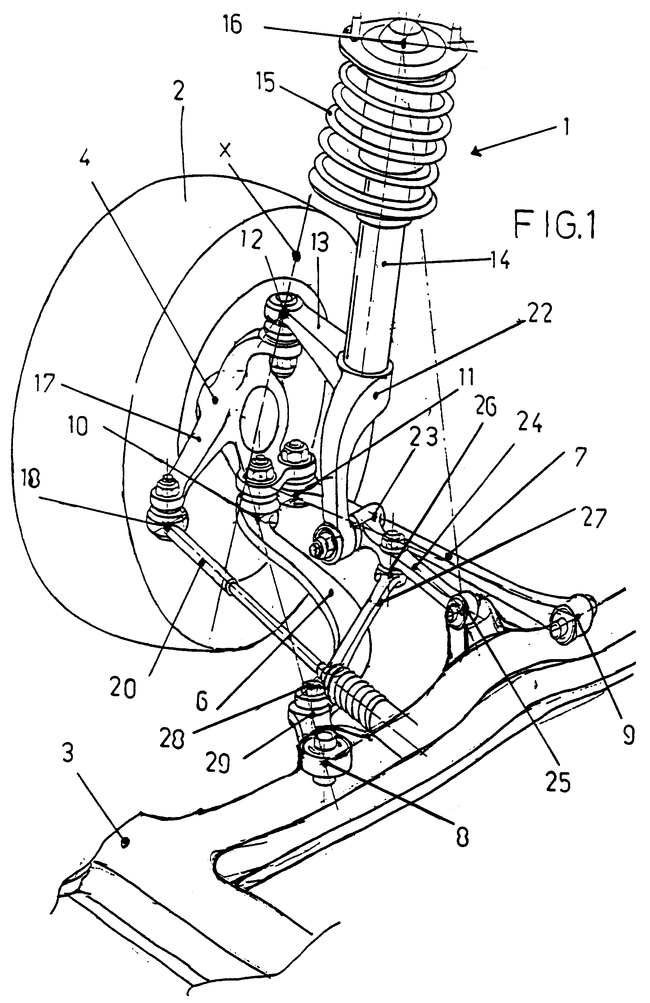

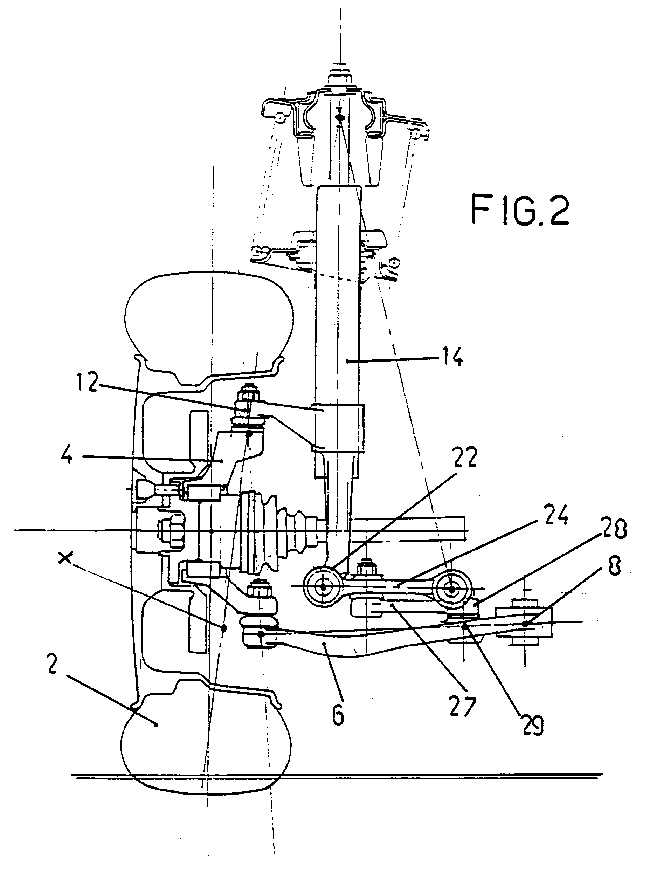

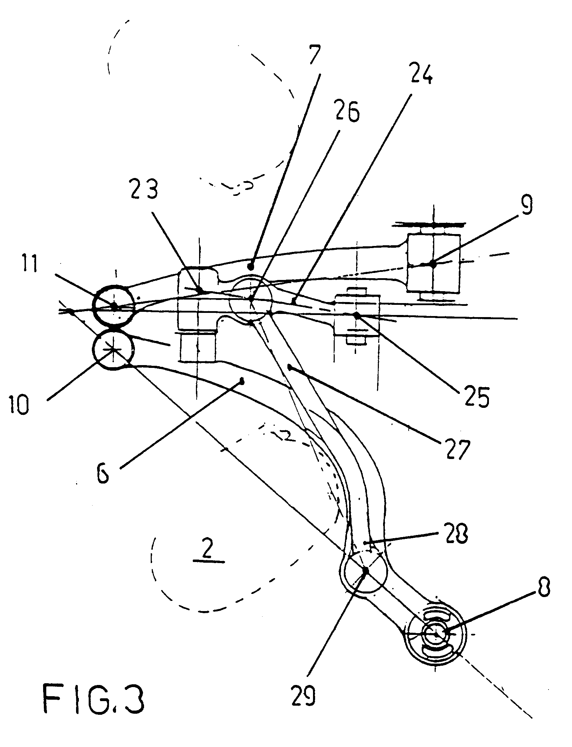

Due to the addition of rod 27, both embodiments of Figs. 1 to 4 allow to control caster angle loss of the outer steering wheel. The rod 27 transmits displacement of points 29, 30 of lower arms 6, 7 to point 12 of the supporting wheel bracket 4 through the appendix 13 of the lower body integral with the shock absorber. Therefore, displacement of point 12 has a component on the longitudinal axis of the vehicle (a backward displacement of the outer wheel) that can also increase the caster angle value when the wheels are straight, depending on the relative positions of points 26, 29, 30 connecting rod 27 to transversal arms 24, 6, 7. Displacement of point 12 in steering renders the steering axis (X) completely virtual. The rod 27 helps in controlling the caster angle also during braking.

The suspension of the present invention also allows good camber recovery in shaking. Due to shaking, rod 24 returns point 23, and therefore point 12 of wheel support bracket 4, towards the inside of the vehicle.

Moreover, the present invention allows to contain the transversal arm in the wheel centre. Therefore, in case of front-wheel drive, stiffening effects of the steering wheel due to a not-free differential are limited.

The hereby proposed arrangement also provides good lengthwise flexibility, as longitudinal movement of wheel 2 relative to the chassis 3 is controlled by elastic hinge 8. Convergence control is accomplished by suitably positioning the transversal arms and rods.

## Claims

1. A suspension for a steerable vehicle wheel, of the kind adopting a multiple-rod arrangement, comprising a wheel supporting bracket (4) rotatably carrying the wheel (2), the bracket (4) being rotatable about a virtual axis (X) and being connected at its lower part to two longitudinally spaced apart points (8, 9) of the vehicle body (3) by means of first and second lower arms (6, 7) disposed transverse relative to the longitudinal axis of the vehicle, the upper portion of said supporting bracket (4) being rotatably connected by means of a joint (12) to an arm (13) rididly connected to the body (14) of a shock absorber fitted with a coil spring (15) and having its upper part (16) attached to the vehicle body, characterised in that the lower end portion (22) of the shock absorber body (14) is coupled to a cylindrical connection at the end portion of a transversal rod (24) located above said first and second lower arms (6, 7) and having the opposite end portion linked to the vehicle body (3) at a point (25) intermediate said longitudinally spaced apart points (8, 9); a reinforcing rod (27) being linked by one end to said upper transversal rod (24), the other end being linked to either said first or said second lower arm (6, 7).

2. A suspension according to claim 1, characterised in that the reinforcing rod (27) has one end portion linked to the upper transversal rod (24) and the other end portion is linked to said second lower arm (7) at a point (30) intermediate the end portions thereof.

3. A suspension according to claim 1, characterised in that articulation points (8, 10, 29) respectively linking said first lower arm (6) to the vehicle body (3), the wheel support bracket (4) and the reinforcement rod (27) are aligned.

4. A suspension according to claim 1, characterised in that articulation points (23, 26, 25) respectively linking the upper transversal rod (24) to the shock absorber (14), the reinforcement rod (27) and the vehicle body (3),are aligned.

5. A suspension according to claims 1 and 2, characterised in that points (9, 30, 11) respectively linking said second lower arm to the vehicle body (3), the reinforcement rod (27) and the wheel support bracket (4) are aligned.

6. A suspension according to claims 1 and 2, characterised in that articulation point (25) linking the upper transversal rod (24) to the vehicle body (3) is elevated relative to the two attachment points (8, 9) of said lower transversal arms (6, 7).

7. A suspension according to claim 1, characterised in that the point connecting the end portion (26) of the reinforcement rod (27) to the upper transversal rod (24) is located proximate to an end (23) of rod (24) which is connected to the shock absorber body (14).

## Patentansprüche

1. Aufhängung für ein gelenktes Rad eines Fahrzeugs unter Benutzung einer Mehrfachlenkeranordnung, die einen Radstützträger (4) umfaßt, der das Rad (3) drehbar tragt, wobei der Träger (4) um eine virtuelle Achse (X) drehbar und an seinem unteren Abschnitt mittels eines ersten und eines zweiten unteren Arms (6, 7), die quer zur Längsachse des Fahrzeugs angeordnet sind, mit zwei in Längsrichtung mit Abstand voneinander angeordneten Punkten (8, 9) des Fahrzeugkörpers (3) verbunden ist, und wobei der obere Abschnitt des Stützträgers (4) mittels eines Gelenks (12) mit einem Arm (13) drehbar verbunden ist, der starr mit dem Körper (14) eines Stoßdämpfers verbunden ist, welcher mit einer Schraubenfeder (15) ausgestattet ist und dessen oberer Teil (16) mit dem Fahrzeugkörper verbunden ist,
dadurch gekennzeichnet,
daß der untere Endabschnitt (22) des Stoßdämpferkörpers (14) mit einer zylindrischen Verbindung am Endabschnitt einer Querstange (24) verbunden ist, die oberhalb des ersten und des zweiten unteren Arms (6, 7) angeordnet ist und deren gegenüberliegender Endabschnitt an einem Punkt (25), der zwischen den in Längsrichtung mit Abstand voneinander angeordneten Punkten (8, 9) liegt, mit dem Fahrzeugkörper (3) verbunden ist; eine Verstärkungsstange (27) ist an einem Ende mit der oberen Querstange (24) verbunden, wobei ihr anderes Ende entweder mit dem ersten oder dem zweiten unteren Arm (6, 7) verbunden ist.

2. Aufhängung nach Anspruch 1,
dadurch gekennzeichnet,
daß die Verstärkungsstange (27) einen Endabschnitt hat, der mit der oberen Querstange (24) verbunden ist, und daß ihr anderer Endabschnitt an einem zwischen dessen Endabschnitten liegenden Punkt (30) mit dem zweiten unteren Arm (7) verbunden ist.

3. Aufhängung nach Anspruch 1,
dadurch gekennzeichnet,
daß die Gelenkknotenpunkte (8, 10, 29), die den ersten unteren Arm (6) jeweils mit dem Fahrzeugkörper (3), dem Radstutzträger (4) und der Verstärkungsstange (27) verbinden, zueinander fluchten.

4. Aufhängung nach Anspruch 1,
dadurch gekennzeichnet,
daß die Gelenkknotenpunkte (23, 26, 25), die die obere Querstange (24) jeweils mit dem Stoßdämpfer (14), der Verstärkungsstange (27) und dem Fahrzeugkörper (3) verbinden, zueinander fluchten.

5. Aufhängung nach den Ansprüchen 1 und 2,
dadurch gekennzeichnet,
daß die Punkte (9, 30, 11), die den zweiten unteren Arm jeweils mit dem Fahrzeugkörper (3), der Verstärkungsstange (27) und dem Radstützträger (4) verbinden, zueinander fluchten.

6. Aufhängung nach den Ansprüchen 1 und 2,
dadurch gekennzeichnet,
daß der Gelenkknotenpunkt (25), der die obere Querstange (24) mit dem Fahrzeugkörper (3) verbindet, bezüglich der zwei Befestigungspunkte (8, 9) der unteren Querarme (6, 7) erhöht angeordnet ist.

7. Aufhängung nach Anspruch 1,
dadurch gekennzeichnet,
daß der Punkt, der den Endabschnitt (26) der Verstärkungsstange (27) mit der obere Querstange (24) verbindet, in der Nähe eines Endes (23) der Stange (24) angeordnet ist, die mit dem Stoßdämpferkörper (14) verbunden ist.

## Revendications

1. Suspension pour roue orientable de véhicule, du type utilisant un agencement à biellettes multiples, comprenant un support de roue (4) supportant à rotation la roue (2), le support (4) pouvant tourner autour d'un axe virtuel (X) et étant raccordé, à sa partie inférieure, a deux points espacés longitudinalement (8, 9) du châssis (3) au moyen d'un premier et d'un second bras inférieurs (6, 7) disposés transversalement par rapport à l'axe longitudinal du véhicule, la partie supérieure dudit support (4) étant raccordée à rotation au moyen d'une articulation (12) à un bras (13) raccordé de manière rigide au corps (14) d'un amortisseur pourvu d'un ressort hélicoidal (15) et ayant sa partie supérieure (16) fixée au châssis du véhicule, caractérisée en ce que la partie d'extrémité inférieure (22) du corps (14) de l'amortisseur est couplée à un organe de raccordement cylindrique en extrémité d'une biellette transversale (24) placée au-dessus desdits premier et second bras inférieurs (6, 7) et dont la partie d'extrémité opposée est raccordée au châssis (3) en un point (25) situé entre lesdits points espacés longitudinalement (8, 9); une biellette de renforcement (27) étant raccordée par une première extrémité à ladite biellette transversale supérieure (24), l'autre extrémité étant raccordée soit audit premier soit audit second bras inférieur (6, 7).

2. Suspension selon la revendication 1, caracterisée en ce que la biellette de renforcement (27) possède une première partie d'extrémité raccordée à la biellette transversale supérieure (24) et l'autre partie d'extrémité est raccordée au second bras inférieur (7) en un point (30) situé entre les parties d'extrémité de cette biellette de renforcement.

3. Suspension selon la revendication 1, caracterisée en ce que les points d'articulation (8, 10, 29) raccordant le premier bras inférieur (6) respectivement au châssis (3), au support de roue (4) et à la biellette de renforcement (27), sont alignés.

4. Suspension selon la revendication 1, caractérisée en ce que les points d'articulation (23, 26, 25) raccordant la biellette transversale supérieure (24) respectivement à l'amortisseur (14), à la biellette de renforcement (27) et au châssis (3), sont alignés.

5. Suspension selon les revendications 1 et 2, caractérisée en ce que les points (9, 30, 11) raccordant le second bras inférieur respectivement au châssis (3), à la biellette de renforcement (27) et au support de roue (4), sont alignés.

6. Suspension selon les revendications 1 et 2, caractérisée en ce que le point d'articulation (25) raccordant la biellette transversale supérieure (24) au châssis (3) est rehaussé par rapport aux deux points d'articulation (8, 9) des bras transversaux inférieurs (6, 7).

7. Suspension selon la revendication 1, caractérisée en ce que le point raccordant la partie d'extrémité (26) de la biellette de renforcement (27) à la biellette transversale supérieure (24) est placé près de l'extrémité (23) de la biellette (24), qui est raccordée au corps d'amortisseur (14).
